(19) Europäisches Patentamt
European Patent Office
Office européen des brevets

(11) **EP 4 691 746 A1**

(12) **EUROPEAN PATENT APPLICATION**

(43) Date of publication:
**11.02.2026 Bulletin 2026/07**

(21) Application number: **24193345.6**

(22) Date of filing: **07.08.2024**

(51) International Patent Classification (IPC):
**B29D 30/06** *(2006.01)* **B29C 33/02** *(2006.01)*
**B29C 35/02** *(2006.01)* **B29C 43/52** *(2006.01)*

(52) Cooperative Patent Classification (CPC):
**B29D 30/0601; B29C 33/02; B29C 35/02;
B29C 43/52;** B29D 2030/067

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bridgestone Europe NV/SA
1930 Zaventem (BE)**

(72) Inventors:
• **Ivonini, Marco
00128 Roma (IT)**
• **Rypak, Martin
00128 Roma (IT)**

(74) Representative: **Marchetti, Alessio
Bridgestone Europe NV/SA - Italian Branch
Technical Center
Via del Fosso del Salceto, 13/15
00128 Roma (IT)**

(54) **HEATING PLATE FOR A VULCANIZATION PRESS, VULCANIZATION PRESS AND METHOD FOR MANUFACTURING A HEATING PLATE**

(57) A heating plate for a vulcanization press, comprising a first channel extending within a first layer of the heating plate, wherein the first channel comprises one or more portions having a serpentine structure and a second channel extending within a second layer of the heating plate, wherein the second channel comprises one or more portions having a serpentine structure.

**Fig. 1**

## Description

## Field of the invention

The present invention relates to a heating plate for a vulcanization press, particularly for the manufacture of tires, as well as a method for manufacturing the heating plate, and a vulcanization press.

## Background

Rubber has been known for centuries to be a suitable material for manufacturing all sorts of articles, due to its comparably high friction coefficient on flat surfaces. Thus, rubber has been used as a crude material for several sorts of articles, such as soles of footwear and the like. Also, rubber was used as early as the 19$^{th}$ century to produce tires, however, due to its natural properties, rubber deforms under heat. This is particularly disadvantageous on hot roads, which may cause a tire to stick to the road and/or burst.

To overcome this problem, vulcanization was invented in the early 19$^{th}$ century. During vulcanization, rubber is heated and mixed with certain chemicals in order to form cross-links between individual polymer chains of the rubber, resulting in improved durability of the rubber product.

Rubber vulcanization is a chemical process that improves the properties of natural or synthetic rubber, making it more durable, elastic, and resistant to various environmental factors. During vulcanization, a rubber compound is usually provided, which includes natural or synthetic rubber and a vulcanization agent (e.g. sulfur), and/or other additives, and which is thoroughly mixed to create a homogeneous mixture.

The mixed rubber compound can then be shaped into the form of the final product, e.g., the tire. This is usually done by using a mold as a negative of the final product and putting a "green tire", i.e., a blank tire formed from the individual components (bead, tread part, carcasses, etc.) into said mold. In the example of tire vulcanization, the mold may thus receive the green tire and output the final tire.

After placing the green tire into the mold, it is subjected to heat and pressure. Typically, this involves temperatures ranging from 130°C to 200°C for a period of 5 to 40 minutes, depending on the tire size and compound. The heating is usually performed by using one or more heating plates, which are included in a vulcanization press together with the mold. Commonly, the heating plates are heated up by subjecting them to a heating agent, such as water vapor, which is often guided through the heating plate in a channel.

During the vulcanization, the vulcanization agent (e.g., the sulfur atoms) form cross-links (e.g., sulfur bridges) between the long polymer chains of the rubber. This cross-linking transforms the plastic, sticky raw rubber into a tough, elastic material. After vulcanization, the rubber product is cooled and removed from the mold.

This vulcanized rubber has improved properties such as increased tensile strength, elasticity, resistance to abrasion, and thermal stability. It also becomes less permeable to gases and resistant to chemicals and weathering. This process ensures that the rubber product (e.g. the tire) can withstand high stresses and strains, for example during driving on a road, while maintaining its shape and performance over a wide range of temperatures and conditions.

However, this process requires a lot of energy in order to start the desired chemical reaction. It is thus an object of the invention to provide a heating plate for a vulcanization press which allows for improved efficiency and effectiveness of the vulcanization, as well as enhanced performance characteristics of the resulting rubber product, thus improving its overall durability and safety.

## Summary of the invention

The object of the invention is achieved by a heating plate, vulcanization press and manufacturing method as laid out in the appended independent claims. Preferred embodiments are described in the appended dependent claims.

According to a first aspect of the invention, a heating plate for a vulcanization press is provided. The heating plate comprises a first channel extending within a first layer of the heating plate, wherein the first channel comprises one or more portions having a serpentine structure and a second channel extending within a second layer of the heating plate, wherein the second channel comprises one or more portions having a serpentine structure. Each of the first channel and the second channel may be suited to carry a hearing agent, such as hot water vapor.

A serpentine structure of a channel may be a channel structure having at least two channel portions extending substantially parallel within a plane, the two parallel channel portions being interconnected by a curved channel portion. Such portions having serpentine structures may sometimes be referred to as "serpentine-shaped portions" or "portions having a serpentine shape". Sometimes, a serpentine structure is also called "meander-shaped".

By providing a multi-layer heating plate with a dedicated channel in each of the layers, and particularly by providing the channel with serpentine-shaped portions, the overall surface of the channels is increased. Thus, when a heating agent, such as hot water vapor, is guided through the channels, the increased surface allows for improved heat transfer from the heating agent to the heating plate, and thus to the rubber product. Consequently, the amount of heat transferred by use of a heating plate according to the present invention, when a certain amount of heating agent at a certain temperature is guided through the channels, is higher than if the same amount of heating agent at the same temperature was guided through a single channel.

Consequently, the heating plate according to the present invention allows transferring a certain amount of heat to the heating plate, and consequently to the rubber, requiring lower amounts of heating agent and/or a lower temperature of the heating agent. Consequently, sufficient heating of a rubber product can be achieved by using fewer heating agent and/or less heat, which consequently allows the preservation of resources and energy, such that a more efficient vulcanization method can be achieved.

In some aspects of the present invention, the first and the second channel may be interconnected by a passage between the first layer and the second layer. This may provide for a more efficient operation of the heating plate, since the heating agent must only be introduced into the heating plate via one opening.

In some aspects of the present invention, the first channel may further comprise at least one portion having a non-serpentine structure, and at least one portion having a serpentine structure of the second channel may be located at least partially above the at least one portion having the non-serpentine structure of the first channel.

A "non-serpentine" structure may for example be a straight or curved channel portion interconnecting two serpentine structures within a plane. In some aspects, the non-serpentine structure may not have any substantially parallel channel portions within the same layer of the heating plate. Generally, the serpentine structures provide for the largest surface of the channels, such that heat transfer is optimal at the serpentine structures, while at a non-serpentine structure, heat transfer can be reduced compared to the serpentine structure. Thus, it is particularly advantageous to provide the second layer in such a way that a serpentine structure of the second layer is layered on top of a non-serpentine structure of the first layer. This way, it can be ensured that at least one portion with high heat transfer is provided at each layer of the heating plate. Hence, more uniform heating of the rubber product can be achieved, which leads to more efficient vulcanization, as well as to improved properties of the resulting rubber product, which consequently can be formed more uniformly.

In some aspects of the present invention, the heating plate may further comprise a first surface configured to emit heat and a second surface opposite to the first surface, wherein the second surface is covered at least partly by a heat insulating arrangement. Preferably, the first surface may face the inside of the vulcanization press and thus the rubber material.

This arrangement allows for enhanced heat transfer towards the rubber material. Particularly, by providing a heat insulating arrangement at one side of the heating plate heat can be prevented from escaping the heating plate on a side facing opposite the rubber, such that the efficiency of the heat transfer to the rubber can be further enhanced. Particularly in view of the increased heat transfer capability of the heating plate according to the present invention, heat would tend to escape the system more easily, because the heat transfer is generally non-directional. By providing the heat insulating arrangement, directionality can be achieved to some extent, thus assuring that more heat energy is transferred to the rubber than is lost from the system.

In some aspects of the present invention, the heat insulating arrangement may comprise at least one insulating layer. The insulating layer may comprise at least one of polyurethane, mineral wool, and preferably glass fiber and/or aerogel, particularly silica aerogel blankets. These insulators have been shown to be particularly effective in connection with the present invention.

In some aspects of the present invention, the heat insulating arrangement may comprise a vacuum insulation system. A vacuum insulation system within the meaning of the present disclosure may comprise a body and a cavity within the body, with an air pressure below atmospheric pressure within the cavity. In some aspects, a vacuum insulation system may comprise one or more Vacuum Insulation Panels (VIP).

The reduced air pressure compared to the atmospheric pressure leads to decreased heat transferring capabilities due to the reduced number of molecules within the cavity. Therefore, vacuum insulation systems are particularly efficient for prohibiting heat transfer.

In some aspects of the present invention, the heating plate may comprise at least one thermal conductor layer. In some aspects of the present invention, the thermal conductor layer may be provided between the first layer and the second layer. The thermal conductor layer provides for particularly enhanced heat transfer between the channels and also towards the rubber product. Thus, this may provide for improved energy efficiency of vulcanization.

In some aspects of the present invention, the thermal conductor layer may comprise at least one of Copper, Silver, Gold, Aluminum, Molybdenum, Zinc, Brass, Nickel, Steel, Bronze, Carbon steel and Stainless steel, preferably Copper or Silver. These materials provide particularly good thermal conductivity of above 50 W/mK. Especially Copper and Silver provide a thermal conductivity of above 350 W/mK.

In some aspects of the present invention, the heating plate may further comprise a third channel extending within a third layer of the heating plate. The third channel may comprise one or more portions having a serpentine structure, and the second channel and the third channel may be interconnected by a passage between the second layer and the third layer.

A third channel having a third layer even further improves the heat transferring capabilities of the heating plate.

In some aspects of the present invention, the second channel may further comprise at least one portion having a non-serpentine structure, and at least one portion having a serpentine structure of the third channel may be located at least partially above the at least one portion having the non-serpentine structure of the second channel.

Similar as discussed elsewhere herein, this may provide for a more uniform distribution of transferred heat over the heating plate, and thus for more efficient vulcanization and a more uniform rubber product.

In some aspects of the present invention, an interior surface of at least one of the first, second and third channel may comprise a plurality of microgrooves. Microgrooves further increase the surface of the respective channels. Hence, a more efficient heat transfer from the heating agent to the heating plate and thus to the rubber can be achieved. Additionally, the microgrooves can create small turbulences in a stream of the heating agent through the channel. These turbulences further improve the heat transfer, as the stream is no longer laminar, such that particles of the heating agent can better interact with the channel sidewalls to transfer energy thereto in the form of heat.

In some aspects of the present invention, the microgrooves may have a depth of at least 0.2 mm and at most 0.5 mm, preferably at least 0.25 mm and at most 0.45 mm, more preferably at least 0.3 mm and at most 0.4 mm. These groove depths have been shown to provide optimal tradeoff between laminar and turbulent stream shares. Some turbulences in the stream are advantageous, as discussed above, however, too high turbulences may disturb circulation of the heating agent. Deeper grooves would lead to greater turbulences in the stream, which might then disturb the circulation of the heating agent through the channels. On the other hand, lower groove depths lead to a lower surface of the channel surface. The tradeoff has been shown to be optimal in the above-specified ranges of groove depth.

In some aspects of the present invention, the microgrooves comprise a plurality of circular-shaped grooves, succeeding one another along a longitudinal direction of the channel. Such circular-shaped grooves have been shown to be relatively effective, as they can be manufactured comparably easily and effectively, for example in accordance with the method of manufacture described elsewhere herein.

Furthermore, it has been shown that heat transfer is ideally improved when a groove is perpendicular to a stream of the heating agent. The circular-shaped grooves, due to their circular shape, have varying angles compared to the laminar stream through the channel. Therefore, when considering the turbulent parts of the stream of heating agent, a circular shape of the microgroove is particularly advantageous, because a turbulent stream comprises stream shares of multiple directions, such that the circular-shaped microgroove may have a portion which is perpendicular to each of the directions comprised in the turbulent stream.

Moreover, the succession of the circular-shaped grooves provides for a particularly large surface area, thus allowing especially efficient heat transfer from the heating agent to the heating plate.

In some aspects of the present invention, each circular-shaped groove may be defined by a center and a radius, and the center of each circular-shaped groove may be shifted with respect to the center of a consecutive circular-shaped groove by a shifting length smaller than its radius, preferably smaller than half its radius. This provides for particularly efficient heat transfer, as the surface can be maximized by minimizing the shifting length between successive microgrooves.

In some aspects of the present invention, each circular-shaped groove may be intersected by at least one consecutive circular-shaped groove. This even further increases the surface area of the channel surface, such that heat transfer from the heating agent to the heating plate can be improved.

In some aspects of the present invention, the radius may correspond to at most half of a channel width, preferably to half of the channel width. The channel width may correspond to the width of any one of the first, second or third channel, measured perpendicular to a streaming direction of the channel. The channel width may vary along the streaming direction of the channel, such that the radius of the circular-shaped microgrooves may also vary with varying channel width.

In some aspects of the present invention, at least one of the first, second and third channel may have a substantially rectangular cross-section.

Within the context of the present disclosure, "substantially rectangular" means that opposing edges of the channel are substantially parallel to each other, and neighboring edges are at an angle of 90° ± 10°, preferably at 90° ± 5°. "Substantially parallel" means that an angle between the opposing edges is less than or equal to 10°, preferably less than or equal to 5°. However, the corners of the channel cross-section may be slightly rounded due to manufacturing. Moreover, edges may also be slightly bent, such that they do not form exactly straight lines.

The substantially rectangular cross-section may comprise an aspect ratio of at least 2.5:1 and at most 6:1, preferably at most 5:1, more preferably at most 4:1, yet more preferably at least 3:1 and at most 3.5:1.

The heat transfer from the heating agent to the heating plate has shown to vary according to the aspect ratio of the channel cross-section. Thus, the inventors found out that the heat transfer works optimal within the defined ranges of aspect ratios.

In a further aspect of the invention, a vulcanization press for curing rubber is provided. The vulcanization press, which may be a vulcanization press for tires, such as vehicle tires, comprises the heating plate as described elsewhere herein. A vulcanization press may sometimes also be referred to as a "curing press".

In some aspects of the present invention, the heating plate of the vulcanization press may be tilted with respect to a horizontal plane. For example, the heating plate may be tilted with respect to a horizontal plane by at least 1.15°, preferably by at least 1.5°.

This tilt with respect to the horizontal plane allows for condensation water to be able to escape from the channels. Heating agents, particularly water vapor, tend to condense on the channel walls, which leads to an additional layer of liquid water (or any other heating agent) between the channel's interior surface and the heating agent, thus disturbing the heat transfer from the heating agent to the heating plate. By tilting the heating plate with respect to the horizontal plane, gravity makes the condensed fluids flow towards a lowest point of the heating plate. Thus, the condensed fluid can be guided out of the channels, such that heat transfer from the heating agent to the heating plate becomes more efficient. In some aspects, the heating plate may further comprise an opening for draining condensed fluid from the heating plate.

In a further aspect of the invention, a method for manufacturing the heating plate as described elsewhere herein is provided. The method may comprise providing a layer piece of the heating plate comprising at least one sidewall of a channel. The method may further comprise providing a rotating tool having a center of rotation, the rotating tool comprising a cutting head, the cutting head being displaced from the center of rotation. Then, the method may further comprise alternatingly performing the following operations:

carving a circular-shaped microgroove in the sidewall of the channel by rotating the rotating tool; and

moving the layer piece along the longitudinal direction of the channel by the shifting length.

The longitudinal direction of the channel may correspond to the intended flowing direction of the heating agent within the channel.

This method provides for a simple and effective way of manufacturing the heating plate described elsewhere herein. Particularly, the method provides for an efficient method of generating the circular-shaped microgrooves on an interior surface of the channel.

In a further aspect of the present invention, a method for manufacturing a tire is provided. The method comprises inserting a rubber compound into the vulcanization press described elsewhere herein and vulcanizing the rubber by guiding a heating agent into at least one channel of the heating plate.

## Brief description of the Figures

Fig. 1 illustrates a schematic view of an exemplary layer of a heating plate for a vulcanization press, in accordance with aspects of the present invention.

Fig. 2 illustrates a cross-sectional view of a heating plate for a vulcanization press, the heating plate comprising two layers, in accordance with aspects of the present invention.

Fig. 3 illustrates a cross-sectional view of a heating plate for a vulcanization press, the heating plate comprising three layers, in accordance with aspects of the present invention.

Fig. 4 illustrates a schematic view of an interior surface of an exemplary channel comprising microgrooves in accordance with aspects of the present invention.

Fig. 5 illustrates a schematic view of an exemplary vulcanization press comprising a heating plate, in accordance with aspects of the present invention.

Fig. 6 is a flowchart illustrating an exemplary method of manufacturing a heating plate in accordance with aspects of the present invention.

Fig. 7 is a flowchart illustrating an exemplary method of manufacturing a tire in accordance with aspects of the present invention.

## Detailed Description

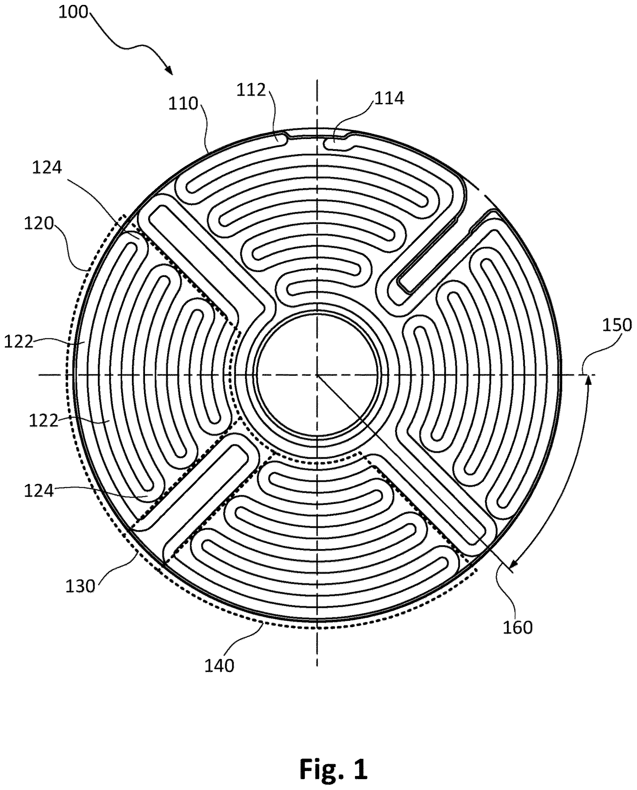

**Fig. 1** illustrates a schematic view of an exemplary layer 100 of a heating plate for a vulcanization press, in accordance with aspects of the present invention.

The exemplary layer 100 may correspond to a first layer of the heating plate. The exemplary layer 100 may thus comprise a first channel 110, which may comprise a portion having a serpentine structure 120. For example, the serpentine structure 120 may comprise multiple channel segments 122 which are substantially parallel to one another and which are interconnected by a curved channel portion 124. The curved channel portion may comprise a "hairpin bend", such that the channel may be bent by approximately 180° in the curved channel portion 124. For example, the multiple parallel channel segments may be parallel to an edge of the heating plate or the exemplary layer 100 of the heating plate, respectively. That is, if the heating plate is of circular shape, and/or the exemplary layer is of circular shape, the parallel channel portions 122 of the serpentine structure 120 may be curved, such that each channel portion 122 extends along a circumferential direction of the circular-shaped heating plate or layer thereof.

Additionally, the channel 110 may comprise a portion having a non-serpentine structure 130. The portion having the non-serpentine structure may serve to interconnect different portions of the channel having serpentine structures. For example, the portion having a non-serpentine structure 130 may interconnect the portions having serpentine structures 120 and 140.

Thus, in the embodiment shown in Figure 1, the first layer of the heating plate may comprise four portions having serpentine structures and four portions having non-serpentine structures, arranged alternatingly along the circumference of the plate.

The channel 110 may comprise an inlet 112. Through the inlet 112, a heating agent can be guided into the channel 110. The inlet may either correspond to an inlet of the heating plate or to a passage between two layers of the heating plate. That is, the heating agent may be guided into the first channel of the first layer by a first inlet 112, may flow through the first channel of the first layer, and may then pass through a passage, similar as the inlet 112, into the second channel of the second layer. Similarly, the heating agent may then flow through the second channel of the second layer, and may then pass through a passage, similar as the inlet 112, into the third channel of the third layer.

As discussed above, the exemplary layer 100 may correspond to the first layer of the heating plate. The second layer and/or the third layer may have the same or a similar configuration as the first layer. However, the second and/or third layer of the heating plate may be rotated by an angle $\vartheta$ in circumferential direction with respect to the first plate, such that a portion having a serpentine structure of the second layer may be located at least partially above a portion having a non-serpentine structure of the first layer.

The channel may further have an outlet 114. Through the outlet, a heating agent can escape from the channel 110. In some aspects, the outlet of the first layer and the inlet of the second layer may together form the passage. Similarly, an outlet of the second layer and an inlet of the third layer may also form a passage. The third layer may comprise an outlet, configured to exhaust the heating agent from the heating plate.

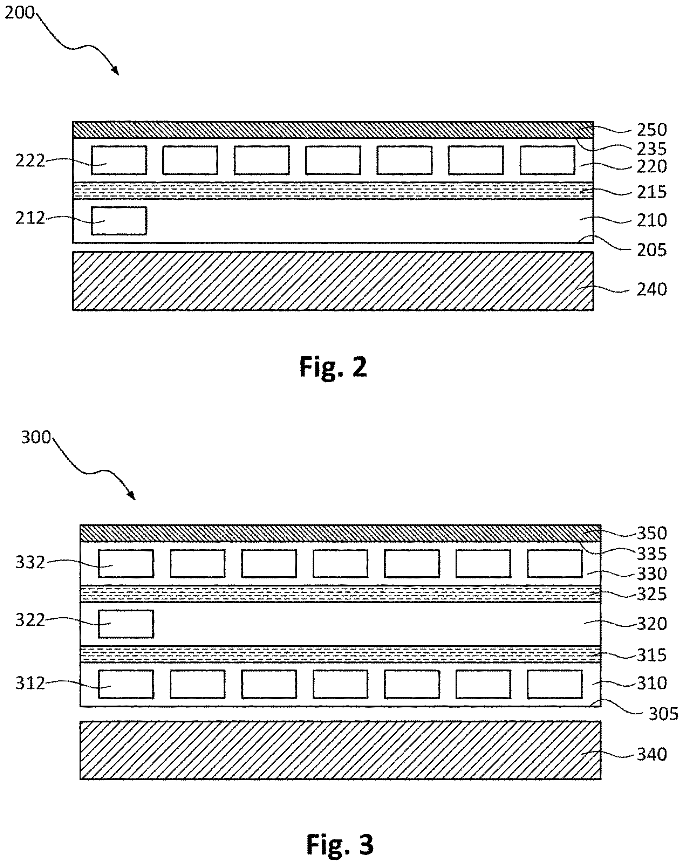

**Fig. 2** illustrates a cross-sectional view of a heating plate 200 for a vulcanization press, the heating plate comprising two layers, in accordance with aspects of the present invention.

According to Fig. 2, the heating plate 200 may comprise a first layer 210 and a second layer 220. As discussed elsewhere herein, in some embodiments, the heating plate may further comprise a third layer (not shown).

The cross-sectional view of Fig. 2 may be along the line 150 (shown in Fig. 1). Thus, the cross-sectional view of Fig. 2 may show the portion having the non-serpentine structure of the first layer. As discussed above, the second layer may correspond to the first layer, rotated by the angle $\vartheta$, such that the cross-sections along the line 160 on the second layer of the heating plate 200 and along line 150 of the first layer of the heating plate 200 may be collocated.

Thus, according to Fig. 2, a portion having a serpentine structure of the second channel 222 of the second layer 220 may be located at least partially above the portion having a non-serpentine structure of the first channel 212 of the first layer 210. The first channel 212 of Fig. 2 may correspond to the first channel 110 as described with reference to Fig. 1.

As illustrated in Fig. 2, both the first channel 212 and the second channel 222 may have a substantially rectangular cross-section. The substantially rectangular cross-section may comprise an aspect ratio of at least 2.5:1 and at most 6:1, preferably at most 5:1, more preferably at most 4:1, yet more preferably at least 3:1 and at most 3.5:1.

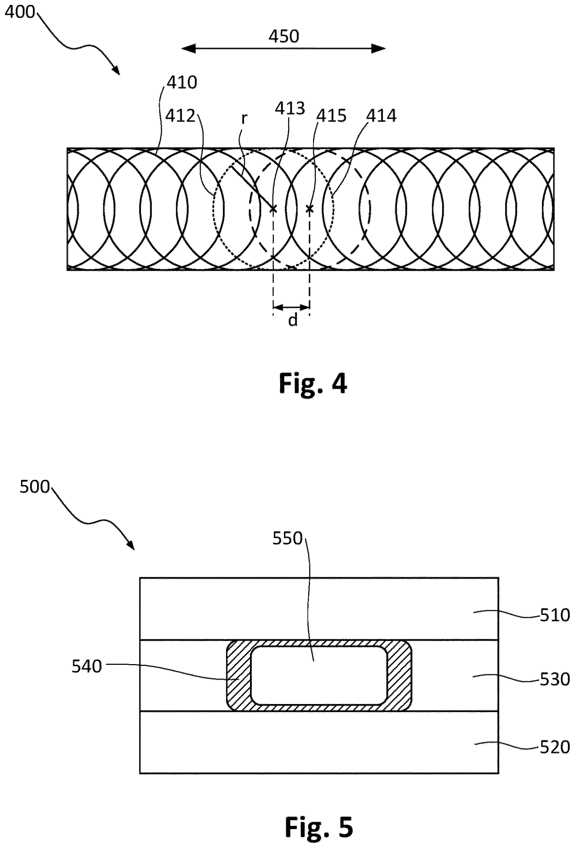

According to Fig. 2, the heating plate 200 may comprise a first surface 205 configured to emit heat. The first surface 205 may face towards a rubber product 240 within a vulcanization press (e.g., in the vulcanization press described with respect to Fig. 4). The heating plate 200 may be in direct contact with the rubber product 240 to be vulcanized, which provides for particularly efficient heat transfer to the rubber product. However, direct contact is not necessarily required, so long as heat can be transmitted from the heating plate 200 to the rubber product 240.

As also shown in Fig. 2, the heating plate may comprise a second surface 235 opposite to the first surface 205. The second surface 235 may be covered at least partly by a heat insulating arrangement 250.

The heat insulating arrangement 250 may comprise at least one insulating layer, the insulating layer comprising at least one of polyurethane, mineral wool and aerogel.

Additionally or alternatively, the heat insulating arrangement 250 may comprise a vacuum insulation system. The vacuum insulation system may comprise one or more vacuum insulation panels, comprising a rigid body surrounding a cavity. The cavity may be evacuated, such that a gas pressure inside the cavity may be lower than atmospheric pressure. The rigid body may form a gas-tight enclosure of the evacuated cavity.

According to Fig. 2, the heating plate 200 may further comprise a thermal conductor layer 215. The thermal conductor layer 215 may be provided between the first layer 210 and the second layer 220. According to some embodiments, the thermal conductor layer 215 may comprise at least one of: Copper, Silver, Gold, Aluminum, Molybdenum, Zinc, Brass, Nickel, Steel, Bronze, Carbon steel and Stainless steel, preferably Copper or Silver. The thermal conductor layer 215 may facilitate the transfer of heat between the layers and may thus improve transferring of heat from the heating agent to the rubber product to be vulcanized.

**Fig. 3** illustrates a cross-sectional view of a heating plate 300 for a vulcanization press, the heating plate comprising three layers, in accordance with aspects of the present invention.

Generally, the heating plate of Fig. 3 corresponds to the heating plate of Fig. 2. However, as illustrated in Fig. 3, the heating plate may further comprise a third channel extending within a third layer of the heating plate, wherein the third channel comprises one or more portions having a serpentine structure, and wherein the second channel and the third channel are interconnected by a passage between the second layer and the third layer, as described with respect to Figure 2.

According to Fig. 3, the heating plate 300 may comprise a first layer 310 and a second layer 320. These layers may correspond to the first layer 210 and the second layer 220 as shown in Fig. 2. According to Fig. 3, the heating plate may further comprise a third layer 330, comprising a third channel 332. The third layer 330 may correspond to the first layer 310 and second layer 320, but may be rotated with respect to the second layer 320, such that a portion having a serpentine structure of the third channel 332 of the third layer 330 may be located at least partially above the portion having the non-serpentine structure of the second channel 322 of the second layer 320.

According to Fig. 3, the heater my comprise a first thermal conductor layer 315, which may correspond to the thermal conductor layer 215 as described with respect to Fig. 2. Furthermore, the heating plate 300 may comprise a second thermal conductor layer 325. The second thermal conductor layer 215 may have similar properties as the thermal conductor layer 215 as described with respect to Fig. 2.

Moreover, the heating plate 300 may comprise a first surface 305 configured to emit heat. The first surface 305 of the heating plate 300 may face a rubber product 340 and may correspond to the first surface 205 of the heating plate 200 described with respect to Fig. 2. The heating plate 300 may further comprise a second surface 335 opposite to the first surface 305. The second surface 335 may correspond to the second surface 235 as described with respect to Fig. 2 and may comprise a heat insulating arrangement 350, corresponding to the heat insulating arrangement 250 of Fig. 2.

Fig. **4** illustrates a schematic view of an interior surface of an exemplary channel 400 comprising microgrooves 410 in accordance with aspects of the present invention.

According to Fig. 4, the channel 400 may comprise a plurality of microgrooves 410. In Fig. 4, the microgrooves 410 are shown as circular-shaped microgrooves, however, other shapes are also possible, as for example straight lines, which are perpendicular to a longitudinal direction 450 of the channel 400, wavy shapes, or entirely different shapes.

The microgrooves may have a depth of at least 0.2 mm and at most 0.5 mm, preferably at least 0.25 mm and at most 0.45 mm, more preferably at least 0.3 mm and at most 0.4 mm.

Microgrooves can be formed in a finished workpiece (e.g. in a finished channel or channel surface surface), by use of a milling machine, a drill, a CNC machine, a saw, or any other apparatus for locally removing material from a workpiece. An exemplary method for making circular shaped grooves, as displayed in Fig. 4, is described elsewhere herein.

As is shown in Fig. 4, the microgrooves may comprise a plurality of circular-shaped microgrooves, succeeding one another along the longitudinal direction 450 of the channel 400.

For illustrating the connection between consecutive circular-shaped microgrooves, a first circular-shaped microgroove 412 and a second circular-shaped microgroove 414 are highlighted in Fig. 4. However, it is to be understood that the relations explained with respect to the first circular-shaped microgroove 412 and the second circular-shaped microgroove 414 may apply to multiple or all consecutive circular-shaped microgrooves.

As is shown in Fig. 4, each circular-shaped microgroove may be defined by a center and a radius. For example, the first circular-shaped microgroove 412 may be defined by center 413 and the radius r. Similarly, the second circular-shaped microgroove 414 may be defined by center 415. For purposes of lucidity, the radius r is not indicated for the second circular-shaped microgroove 414 in Fig. 4. However, the radius of the second circular-shaped microgroove 414 may correspond to radius r of the first circular-shaped microgroove 412.

As is shown in Fig. 4, the center of each circular-shaped microgrooves may be shifted with respect to the center of a consecutive circular-shaped microgroove by a shifting length smaller than its radius, preferably smaller than half its radius.

Hence, the center 415 of the second circular-shaped microgroove 414 may be shifted with respect to the center 413 of the first circular-shaped microgroove 412 along the longitudinal direction 450 of channel 400 by a shifting length d. The shifting length d may correspond

$$d < \frac{r}{2}$$

to the radius $r$ as $d < r$, preferably .

As is shown in Fig. 4, each circular-shaped microgroove may be intersected by at least one consecutive circular-shaped microgroove. Preferably, each circular-shaped microgroove may be intersected by multiple consecutive circular-shaped microgrooves. As shown in Fig. 4, for example, each circular-shaped microgroove may be intersected by three consecutive circular-shaped microgrooves. The number of consecutive circular-shaped microgrooves intersecting each circular-shaped microgroove depends on the ratio between the shifting length d and the radius r: A smaller shifting length $d$ at constant radius $r$ may lead to intersection points with more consecutive grooves. Such intersection points may be particularly advantageous, because at these points the surface area of the channel surface is especially increased, leading to improved heat transfer from the heating agent and the heating plate. Thus, a relatively small shifting length $d$ may be particularly advantageous.

The radius $r$ of each circular-shaped microgroove 410 may correspond to at most half the channel width, preferably to half the channel width.

Fig. **5** illustrates a schematic view of an exemplary vulcanization press 500 comprising a heating plate in accordance with aspects of the present invention. Fig. 5 is merely intended to illustrate the basic principle of a vulcanization press. In reality, a vulcanization press can deviate considerably from what is depicted in Fig. 5.

According to Fig. 5, the vulcanization press may comprise a top plate 510 and a bottom plate 520. The heating plate described elsewhere herein, for example, the heating plate described with respect to Figures 1-4, may be comprised in the top plate 510, the bottom plate 520 or both. In some aspects, the heating plate may be tilted with respect to a horizontal plane.

In between the top plate 510 and the bottom plate 520, there may be a middle layer 530. The middle layer 530 may comprise a mold, shaped as a negative of the rubber product to be created in the vulcanization press. For example, if a tire is to be made, the mold may comprise a negative of a shape of a desired tire tread. Moreover, the middle layer may optionally comprise further heating elements, which may also correspond to a heating plate as described with reference to Figs. 1-4.

Within the mold in the middle layer 530, there may be a cavity in which a rubber compound 540, or a green tire, can be introduced. The rubber compound may then be vulcanized by subjecting it to heat by means of the top plate 510 and/or bottom plate 520. The heat may trigger the vulcanization, such that the rubber compound is solidified into the rubber product.

Optionally, a bladder 550 may be placed within the mold cavity, to define an interior shape of the rubber product. For example, if a tire is to be made by the vulcanization press, the bladder 550 can define the interior shape of the tire, such that air tubes and a wheel rim can be placed therein.

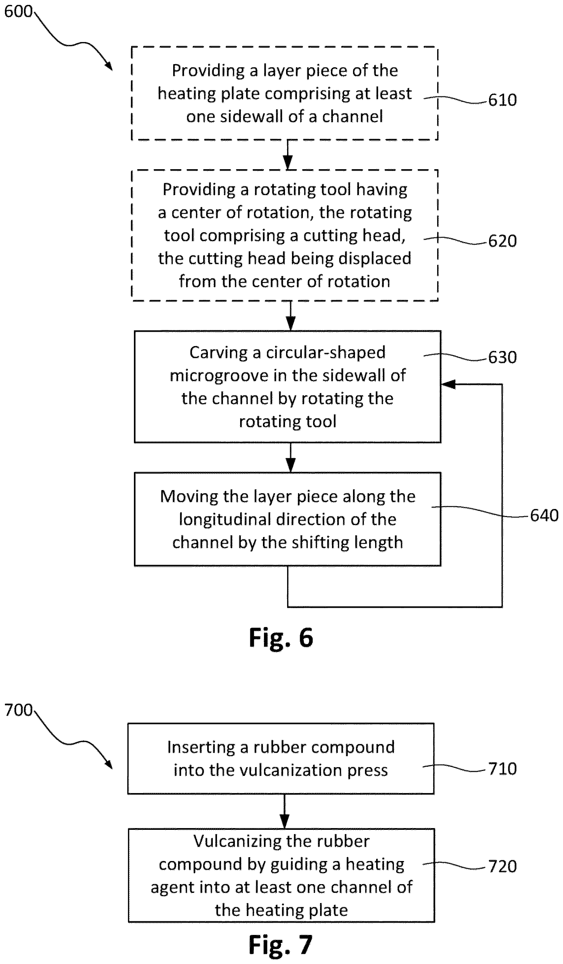

**Fig. 6** is a flowchart illustrating an exemplary method 600 of manufacturing the heating plate in accordance with aspects of the present invention. Particularly, by performing method 600, the circular-shaped microgrooves described with respect to Fig. 4 can be created.

According to Fig. 6, the method 600 may optionally comprise providing a layer piece of the heating plate comprising at least one sidewall of a channel (block 610).

The method 600 may optionally further comprise providing a rotating tool having a center of rotation (620). The rotating tool may comprise a cutting head, the cutting head being displaced from the center of rotation. For example, the rotating tool may correspond to a common drill, with the drilling head being displaced from the center of rotation.

Moreover, the method 600 comprises alternatingly performing the following operations:

Firstly, the method 600 may comprise carving a circular-shaped groove in the sidewall of the channel by rotating the rotating tool (block 630).

Further, the method 600 may comprise moving the layer piece along the longitudinal direction of the channel by the shifting length (block 640).

After finishing the step at block 640, the method may return to block 630, and perform the step defined therein again.

This way, circular-shaped microgrooves as displayed e.g. in Fig. 4 may be created along the whole longitude of the channel sidewall.

**Fig. 7** is a flowchart illustrating an exemplary method 700 of manufacturing a tire in accordance with aspects of the present invention.

According to Fig. 7, the method 700 may comprise inserting a rubber compound into a vulcanization press (block 710). The vulcanization press may comprise the heating plate as described with respect to Figs. 1-4. In some examples, the vulcanization press may correspond to the vulcanization press described with respect to Fig. 5.

According to Fig. 7, the method may further comprise vulcanizing the rubber compound by guiding a heating agent into at least one channel of the heating plate (block 720).

List of reference number:

| | |
|---|---|
| 100 | layer |
| 110, 212, 312 | first channel |
| 110, 400 | channel |
| 112 | inlet |
| 114 | outlet |
| 120, 140 | serpentine structures |
| 122 | channel portion |
| 124 | curved channel portion |
| 130 | non-serpentine structure |
| 150, 160 | line |
| 200, 300 | heating plate |
| 205, 305 | first surface |
| 210, 310 | first layer |
| 215 | thermal conductor layer |
| 220, 320 | second layer |
| 222, 322 | second channel |
| 235, 335 | second surface |
| 240, 340 | rubber product |
| 250, 350 | heat insulating arrangement |
| 315 | first thermal conductor layer |
| 325 | second thermal conductor layer |
| 330 | third layer |
| 332 | third channel |
| 400 | channel |
| 410 | microgrooves |
| 412 | first circular-shaped microgroove |
| 413, 415 | center |
| 414 | second circular-shaped microgroove |
| 450 | longitudinal direction |
| 500 | vulcanization press |
| 510 | top plate |
| 520 | bottom plate |

| 530 | middle layer |
| 540 | rubber compound |
| 550 | bladder |
| 600, 700 | method |
| d | shifting length |
| r | radius |

## Claims

1. A heating plate for a vulcanization press, comprising:

   a first channel extending within a first layer of the heating plate, wherein the first channel comprises one or more portions having a serpentine structure;
   a second channel extending within a second layer of the heating plate, wherein the second channel comprises one or more portions having a serpentine structure.

2. The heating plate of claim 1, wherein the first channel and the second channel are interconnected by a passage between the first layer and the second layer.

3. The heating plate of any one of the preceding claims, wherein the first channel further comprises at least one portion having a non-serpentine structure, and wherein at least one portion having a serpentine structure of the second channel is located at least partially above the at least one portion having the non-serpentine structure of the first channel.

4. The heating plate of any one of the preceding claims, further comprising a first surface configured to emit heat and a second surface opposite to the first surface, wherein the second surface is covered at least partly by a heat insulating arrangement.

5. The heating plate of claim 4, wherein the heat insulating arrangement comprises at least one insulating layer, the insulating layer comprising at least one of polyurethane, mineral wool and aerogel.

6. The heating plate of any one of claims 4 or 5, wherein the heat insulating arrangement comprises a vacuum insulation system.

7. The heating plate of any one of the preceding claims, wherein the heating plate comprises at least one thermal conductor layer.

8. The heating plate of claim 7 when dependent on claim 4, wherein the thermal conductor layer is provided between the first layer and the second layer.

9. The heating plate of any one of claims 7 or 8, wherein the thermal conductor layer comprises at least one of:

   Copper, Silver, Gold, Aluminum, Molybdenum, Zinc, Brass, Nickel, Steel, Bronze, Carbon steel and Stainless steel,
   preferably Copper or Silver.

10. The heating plate of any one of the preceding claims, further comprising a third channel extending within a third layer of the heating plate,

    wherein the third channel comprises one or more portions having a serpentine structure, and
    wherein the second channel and the third channel are interconnected by a passage between the second layer and the third layer.

11. The heating plate of claim 10, wherein the second channel further comprises at least one portion having a non-serpentine structure, and wherein at least one portion having a serpentine structure of the third channel is located at least partially above the at least one portion having the non-serpentine structure of the second channel.

12. The heating plate of any one of the preceding claims, wherein an interior surface of at least one of the first, second and third channel comprises a plurality of microgrooves.

13. The heating plate of claim 12, wherein the microgrooves have a depth of at least 0.2 mm and at most 0.5 mm, preferably at least 0.25 mm and at most 0.45 mm, more preferably at least 0.3 mm and at most 0.4 mm.

14. The heating plate of any one of claims 12 or 13, wherein the microgrooves comprise a plurality of circular-shaped microgrooves, succeeding one another along a longitudinal direction of the channel.

15. The heating plate of claim 14, wherein each circular-shaped microgroove is defined by a center and a radius, wherein the center of each circular-shaped microgroove is shifted with respect to the center of a consecutive circular-shaped microgroove by a shifting length smaller than its radius, preferably smaller than half its radius.

16. The heating plate of claim 15, wherein each circular-shaped microgroove is intersected by at least one consecutive circular-shaped microgroove.

17. The heating plate of any one of claims 15 or 16, wherein the radius corresponds to at most half the channel width, preferably to half the channel width.

18. The heating plate of any one of the preceding claims, wherein at least one of the first, second and third channel has a substantially rectangular cross-section, wherein the substantially rectangular cross-section comprises an aspect ratio of at least 2.5:1 and at most 6:1, preferably at most 5:1, more preferably at most 4:1, yet more preferably at least 3:1 and at most 3.5:1.

19. A vulcanization press for curing rubber, the vulcanization press comprising the heating plate of any one of the preceding claims.

20. The vulcanization press of claim 19, wherein the heating plate is tilted with respect to a horizontal plane.

21. A method of manufacturing the heating plate of any one of claims 15 or 16, comprising:

   providing a layer piece of the heating plate comprising at least one sidewall of a channel;
   providing a rotating tool having a center of rotation, the rotating tool comprising a cutting head, the cutting head being displaced from the center of rotation; and
   alternatingly performing the following operations:

      carving a circular-shaped groove in the sidewall of the channel by rotating the rotating tool; and
      moving the layer piece along the longitudinal direction of the channel by the shifting length.

**Fig. 1**

**Fig. 2**

**Fig. 3**

**Fig. 4**

**Fig. 5**

600

```
┌ ─ ─ ─ ─ ─ ─ ─ ─ ─ ─ ─ ─ ─ ─ ─ ┐
│   Providing a layer piece of the   │
│  heating plate comprising at least  ├── 610
│      one sidewall of a channel      │
└ ─ ─ ─ ─ ─ ─ ─ ─ ─ ─ ─ ─ ─ ─ ─ ┘
```

```
┌ ─ ─ ─ ─ ─ ─ ─ ─ ─ ─ ─ ─ ─ ─ ─ ┐
│    Providing a rotating tool having  │
│    a center of rotation, the rotating │
│   tool comprising a cutting head,   ├── 620
│   the cutting head being displaced  │
│       from the center of rotation    │
└ ─ ─ ─ ─ ─ ─ ─ ─ ─ ─ ─ ─ ─ ─ ─ ┘
```

```
┌─────────────────────────┐
│    Carving a circular-shaped     ├── 630
│   microgroove in the sidewall of  │
│    the channel by rotating the    │
│          rotating tool            │
└─────────────────────────┘
```

```
┌─────────────────────────┐
│  Moving the layer piece along the  │
│     longitudinal direction of the   ├── 640
│    channel by the shifting length   │
└─────────────────────────┘
```

**Fig. 6**

700

```
┌─────────────────────────┐
│    Inserting a rubber compound    ├── 710
│    into the vulcanization press   │
└─────────────────────────┘
```

```
┌─────────────────────────┐
│     Vulcanizing the rubber       │
│  compound by guiding a heating   ├── 720
│  agent into at least one channel of │
│         the heating plate         │
└─────────────────────────┘
```

**Fig. 7**

Europäisches
Patentamt
European
Patent Office
Office européen
des brevets

# EUROPEAN SEARCH REPORT

**Application Number**

EP 24 19 3345

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 105 690 628 A (XIE YIZHONG) 22 June 2016 (2016-06-22) * Text of 'Embodiment 2' in association with Fig. 5.; figure 5 * | 1-21 | INV. B29D30/06 B29C33/02 B29C35/02 B29C43/52 |
| A | US 5 330 337 A (SIEGENTHALER KARL J [IT]) 19 July 1994 (1994-07-19) * Text associated with Figs. 4 and 5.; figures 4,5 * | 1-21 | |
| A | EP 2 878 437 A1 (HARBURG FREUDENBERGER MASCHB [DE]) 3 June 2015 (2015-06-03) * paragraphs [0029], [0030]; figures 3,4 * | 1-21 | |

**TECHNICAL FIELDS SEARCHED (IPC)**

B29D
B29C

The present search report has been drawn up for all claims

| Place of search | Date of completion of the search | Examiner |
|---|---|---|
| Munich | 13 January 2025 | Callan, Feargel |

EPO FORM 1503 03.82 (P04C01)

## ANNEX TO THE EUROPEAN SEARCH REPORT
## ON EUROPEAN PATENT APPLICATION NO.

EP 24 19 3345

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2025

| Patent document cited in search report | | Publication date | Patent family member(s) | | Publication date |
|---|---|---|---|---|---|
| CN 105690628 | A | 22-06-2016 | NONE | | |
| US 5330337 | A | 19-07-1994 | DE | 69216048 T2 | 07-05-1997 |
| | | | EP | 0540045 A1 | 05-05-1993 |
| | | | ES | 2097260 T3 | 01-04-1997 |
| | | | JP | 3243015 B2 | 07-01-2002 |
| | | | JP | H05245843 A | 24-09-1993 |
| | | | US | 5330337 A | 19-07-1994 |
| EP 2878437 | A1 | 03-06-2015 | DE | 102014006482 A1 | 03-06-2015 |
| | | | EP | 2878437 A1 | 03-06-2015 |
| | | | WO | 2015081921 A1 | 11-06-2015 |

EPO FORM P0459

For more details about this annex : see Official Journal of the European Patent Office, No. 12/82